# EUROPEAN PATENT SPECIFICATION

(11) **EP 3 699 024 B1**
(45) Date of publication and mention of the grant of the patent: **14.06.2023**
(21) Application number: 20157329.2
(22) Date of filing: 14.02.2020
(51) Int. Cl.: B60N 2/20, B60N 2/879

(54) **SEAT FOR A VEHICLE**
FAHRZEUGSITZ
SIÈGE POUR UN VÉHICULE

(30) Priority: 25.02.2019 ES 201930162
(43) Date of publication of application: 26.08.2020
(73) Proprietor: Seat, S.A., 08760 Martorell (ES)
(72) Inventor: CAPELLA SALA, Marc, 08760 Martorell, Barcelona (ES); VÁZQUEZ IGLESIAS, Rodrigo Germán, 08760 Martorell, Barcelona (ES); SILVA FERNÁNDEZ, Juan Manuel, 08760 Martorell, Barcelona (ES)
(74) Representative: Elzaburu S.L.P.

(56) References cited:
- EP-A1- 0 808 741
- DE-A1-102004 005 705
- JP-A- S6 246 729
- US-A1- 2012 299 354

## Description

### Object of the invention

The object of the present patent application is a seat for a vehicle according to claim 1, which incorporates significant innovations and advantages.

### Background of the invention

A seat of a vehicle is the element responsible for seating the driver or passengers inside the vehicle. Furthermore, it is intended that the seats secure the occupants of the vehicle in a comfortable manner but, at the same time, retain said occupants in the seat in the event of a collision.

There are many different designs for a seat, but in general, they consist of a cushion with a backrest assembled on said cushion. The cushion has the function of providing a support surface for the thighs of the person occupying the seat, in addition to supporting their weight, and the backrest has the function of providing a support surface for the back of said occupant, from the hips up to the shoulders.

Vehicle seats are known which integrate a function for folding the seat of the vehicle, especially the front seats, so that a passenger in the rear seat can access, by means of the opening defined by the front door, the seats arranged in the rear area of the vehicle. This type of mechanism facilitates access to the rear seats of the vehicle. In order to access the rear seats, the user must actuate an actuator which unlocks the backrest of the front seat with the aim of it moving from a reclined position to a position folded forwards. It is common that, when the actuator is actuated, the longitudinal adjustment of the front seat is unlocked, such that it can be moved forwards while the backrest is folded forwards.

The mentioned control is performed through an actuator, which enables the user to fold the backrest when the user activates the actuator. Actuators of this type are usually on one of the sides of the seat or underneath it, in an area that the user can reach. However, the different positions of the actuator presented may not be very ergonomic for the user. At present, these actuators tend to be placed in the very backrest of the seat, so that the user can access it more comfortably.

In relation to the trend mentioned, document DE102004005705 is known, wherein a backrest with an integrated headrest comprising an actuator for adjusting the folding of the backrest of the seat is disclosed. This actuator is integrated in the upper portion of the integrated headrest, more specifically in the rear area in the advance direction of the vehicle. In this manner, the user of the seat has access to the actuator in an ergonomic manner both from the left area and from the right area when they are sitting on the seat.

The disadvantage of document DE102004005705 is that since the actuator is in the outer portion of the headrest, it is possible for it to be actuated in a non-voluntary manner by an occupant of the vehicle, activating the folding mechanisms in an unwanted manner. Apart from the inconvenience this may entail, it can be dangerous for an occupant of the vehicle to accidentally activate the actuator when the vehicle is moving. This danger especially increases in small vehicles, wherein the space is smaller and has a greater risk of contact with the elements of the vehicle when accessing or exiting same.

Another drawback associated with DE102004005705 is that it envisages an improvement in ergonomics only for the situation where the user is seated, without taking into account access to the actuator in other necessary situations.

Furthermore, the actuator is not very visible from the front portion of the vehicle when the backrest is in an upright or seated position, for which reason the user could have trouble finding the actuator.

US2012/299354 discloses a seat assembly that includes a seat bottom and a seat back supported for movement relative to the seat bottom. The seat assembly also includes a support member that extends from the seat back. A release mechanism is supported on the seat back for rotation about the support member, wherein rotation of the release mechanism is adapted to release the seat back for movement relative to the seat bottom.

A seat assembly includes a head restraint that is attached to the seat back and extends upwardly therefrom. The head restraint is, in large measure, conventional in the art and is adapted to support the head of a passenger. The head restraint is supported on the seat back by a pair of support members. The support members can be any elongated members, such as rods or posts, which extend outwardly from the seat back. The head restraint can be attached to the seat back in any manner.

Therefore, it seems necessary to offer an alternative to the state of the art which provides a vehicle seat with an actuator which adjusts the folding of the backrest by providing safety, being more accessible to the user and improving the visibility thereof.

### Summary

The present invention has been made in order to solve the aforementioned drawbacks detected in the state of the art while the advantages achieved by the state of the art remain intact.

A seat for a vehicle, preferably a motor vehicle, normally comprises a cushion and a backrest. Cushion is understood as the part of the seat which defines a support surface for the thighs of the occupant, i.e., it vertically holds the weight of the occupant. Backrest is understood as the part of the seat which defines a support surface for the back of the occupant, i.e., it holds, in the advance direction of the vehicle, the supports for the back of the occupant. Both the cushion and the backrest comprise a frame, padding, which provides cushioning and comfort properties for the user, upholstery, which covers the padding in order to protect it and provide a good outer finish, and exterior coatings, to cover certain areas which are to not be seen by the user. A variety of technologies, geometries and materials can be used to form said components of the seat.

The present invention is a seat for a vehicle, wherein the seat comprises a backrest, a headrest, wherein the backrest and the headrest define a hollow space therebetween, a folding mechanism, configured to move the backrest from a first upright position to a second folded position and an actuator configured to control the folding mechanism. The actuator is arranged on at least one of the surfaces which define the hollow space.

Backrest is understood as the portion of the seat on which the back rests, from the shoulder area to the waist. Headrest is understood as the raised portion on top of the backrest where the head of a user rests. The hollow space is defined between the backrest and the headrest; in this position the hollow space does not interfere with the ergonomics of the user or their comfort, since it respects the contact areas with the head and back.

The hollow space defined between the headrest and the backrest is limited by at least three surfaces defining it. The hollow space is an opening which extends from the front surface of the seat, in the advance direction of the vehicle, the backrest being in a first upright position, from the seat to the rear area of the seat, with respect to the same advance direction. The seat is a bucket-type seat, i.e., a seat with the headrest integrated in the backrest, such that the hollow space will be an opening which crosses through the entire solid portion of the seat and the elements thereof such as the foam, the frame, the decorative elements etc.

In another non-claimed alternative wherein the headrest can be moved or removed from the backrest, the gap will be defined by the joining elements, the lower surface of the headrest and the upper surface of the backrest. The side surfaces which define the hollow space can be made of different materials depending on the type of vehicle and the components thereof.

The mechanical locking mechanism is configured to move the backrest from a first upright position to a second folded position. First upright position refers to when the backrest is in the position of use for sitting, i.e., the backrest is arranged in a vertical plane YZ which is orthogonal to the advance direction X of the vehicle. Second folded position is understood as when the seat is in a non-use position and the backrest is completely folded. This position is determined by the degrees that the folding mechanism enables the backrest to rotate. The mechanical locking mechanism is controlled by an actuator. This actuator is able to be actuated by the occupant of the vehicle. Thus, it enables the user, by means of the folding mechanism, to move the backrest to a first position when it is to be used for sitting on the seat, and to move it to a second position when the seat is to be folded in order to have better access to the rear portion of the compartment.

This actuator is arranged on at least one of the surfaces which define the hollow space. The fact that the actuator is located inside the hollow space enables access to the gap from a plurality of positions. In this manner, access is facilitated for the user, since the actuator can be comfortably accessed when the user is outside the vehicle, when they are in the front area of the vehicle and when they are in the rear area of the vehicle. Another advantage of this arrangement is that the seat can be folded with one hand, without needing to use one hand to activate a button and the other hand to transmit the effort needed to lower the seat.

Likewise, by being on one of the walls which define the hollow space, the actuator is prevented from being accidentally actuated. By being on one of the surfaces which limit the hollow space, the contact with the actuator only occurs on those occasions when the user wants to fold or recline the seat. In this manner, in addition to the inconveniences mentioned, the risk of accident is reduced if another user actuates the actuator by mistake.

According to the invention, the headrest is joined in a fixed manner to the backrest such that the headrest moves jointly with the backrest, such that the headrest and the backrest move as a single system, maintaining the relationship of positions therebetween.

The hollow space is arranged in a middle position, wherein the middle position is located at one same distance, according to a horizontal direction Y perpendicular to an advance direction X of the vehicle, from each of the side ends of the backrest. Thus, the hollow space will be centred with respect to the sides, for which reason it is ensured that the access is equally suitable from each of the sides, i.e., from a left side and a right side according to the advance direction X of the vehicle.

More specifically, the actuator is arranged in a centred position with respect to the hollow space, wherein the centred position is positioned at one same distance, according to a horizontal direction Y perpendicular to an advance direction X of the vehicle, from each of the side surfaces which define the hollow space. Thus, it is ensured that the actuator is equally accessible for an occupant of the vehicle located on the right side of the seat or for an occupant located on the left side of the seat. Furthermore, by being positioned in the centred position with respect to the hollow space, it is intuitive for the user.

According to an alternative embodiment, the actuator is moved with respect to a centred position with respect to the hollow space, wherein the centred position is positioned at one same distance, according to a horizontal direction Y perpendicular to an advance direction X of the vehicle, from each of the side surfaces which define the hollow space. Thus, when the user accesses the vehicle on one side towards which the actuator is moved, it will be more ergonomic for the user to access it, the actuator being able to be on the lower surface or on the upper surface. This configuration is suitable when access to the vehicle is only enabled on a left side or a right side of the vehicle. Upper surface is understood as the surface which limits the hollow space of the vehicle arranged farther away from the floor of the vehicle, the backrest being in a first upright position. Lower surface is understood as the surface of those which define the hollow space arranged closest to the floor of the vehicle, the backrest being in a first upright position. In this manner, if the user accesses the vehicle from the side towards which the actuator is moved, they access the actuator in a more ergonomic manner.

More specifically, the actuator is arranged on at least one of the side surfaces. These side walls are what define the hollow space and are arranged on a left side and a right side of the hollow, along an axis X in the advance direction of the vehicle.

According to a non-claimed alternative embodiment, the headrest can be slid with respect to the backrest by means of an adjustment mechanism, such that a distance between the backrest and the headrest can be adapted, wherein the actuator is arranged on the lower surface which defines the hollow space. Thus, the adaptation of the distance is made by means of moving the headrest in a vertical direction along the Z axis with the backrest being in a first upright position, such that the distance of the headrest with respect to the backrest can be adjusted according to the needs of the user.

In particular, the actuator is arranged in a centred position, wherein the centred position is positioned at one same distance, according to a horizontal direction Y perpendicular to an advance direction X of the vehicle, from each of the side surfaces which define the hollow space. In this manner, access to the actuator is possible from a plurality of positions. Thus, the actuator is designed to be accessed by a user who is outside of the vehicle, a user who is in the rear portion of the seat or a user who is in the front portion of the seat. The fact that it is arranged in the plane of symmetry enables the access to be accessible from the left area and the right area of the seat.

More particularly, the actuator is an element that can be slid with respect to the headrest. Thus, the movement to be performed by the user is to press or pull, simplifying the movements necessary to actuate the actuator. In the case of a first reclined position of the backrest, the actuator can be slid in a vertical direction Z, orthogonal to the advance axis X of the vehicle. According to one embodiment, the headrest comprises support means, wherein the support means are configured to act as a support surface for at least one finger of the occupant. This is especially advantageous, since by having to exert force on the actuator in order to slide it, and thus actuate it, it is convenient for one of the areas of the hand to have a support, for example, a support for the thumb, and with the remaining fingers, greater pressure can be exerted on the actuator. The areas of the hand can be supported in an inverse manner. This achieves greater stability in the actuation and improves the ergonomics of the position of the hand of the user, being able to transmit the force with greater ease.

Specifically, the distance between the support means and the actuator is less than 12 cm. This enables an average adult user to reach both the actuator and the support means. Thus, the support means can be a recess or cavity made in the backrest or headrest, depending on the position of the actuator and the sliding direction of the actuator. The dimensions and geometry of the support means will be suitable for receiving the at least one finger of the occupant.

According to a particular embodiment, the headrest comprises an outer surface, wherein the distance between the outer surface and the actuator is less than 12 cm. Thus, the outer surface will be a support point for the user for one area of the hand and the other one actuates the actuator. This distance enables an average adult user to reach both the actuator and the support means. In this case, the support point is the outer surface itself on which the user can support their thumb and press the actuator with one of their remaining fingers or vice versa. The outer support surface can be the upper surface of the headrest, the side surface of the headrest or the side surface of the headrest, depending on the position of the actuator.

More specifically, the actuator is configured to be moved according to a rotational movement with respect to the headrest. Wherein the actuator is preferably a lever, which is easily operated from any position. The movement to be performed is intuitive.

Advantageously, if the actuator is actuated, a mechanical locking mechanism releases a rotation of the backrest, such that the backrest rotates between a first and a second position. In this manner, the user can define a first reclined position wherein the seat is in the use position for sitting in it and a second folded position wherein the seat is adjacent to the cushion such that access to the rear portion of the seat is facilitated, among other manoeuvres. If the actuator is not actuated, the mechanical locking mechanism locks a rotation of the backrest, such that the backrest is locked in a first upright position or a second folded position. Alternatively, the backrest can be locked in an intermediate position between a first upright position and a second folded position.

The attached drawings show, by way of non-limiting example, a seat for a vehicle, constituted according to the invention. Other features and advantages of said seat for a vehicle object of the present invention will become apparent from the description of a preferred but not exclusive embodiment illustrated by way of non-limiting example in the attached drawings, in which:

### Brief description of the drawings

Figure 1A is a first perspective view of a seat for a vehicle of the type with the headrest integrated in the backrest, according to the present invention.
Figure 1B is a perspective view of a seat for a vehicle of the type with the headrest that can be moved with respect to the backrest, not according to the present invention.
Figure 2A is a first side view of a seat for a vehicle, in a first upright position, according to the present invention.
Figure 2B is a second side view of a seat for a vehicle, in a second folded position, according to the present invention.
Figure 2C is a third side view of a seat for a vehicle, in an intermediate position, between the first upright position and the second folded position, according to the present invention.
Figure 3A is a first detail view of the headrest, the actuator not being actuated, according to the present invention.
Figure 3B is a second detail view of the headrest, the actuator being actuated, according to the present invention,
Figure 4 is a view of the headrest, the actuator being arranged on one of the sides, according to the present invention.

### Description of a preferred embodiment

In light of the aforementioned figures, and in accordance with the adopted numbering, one may observe therein an example of a preferred embodiment of the invention, which comprises the parts and elements indicated and described in detail below.

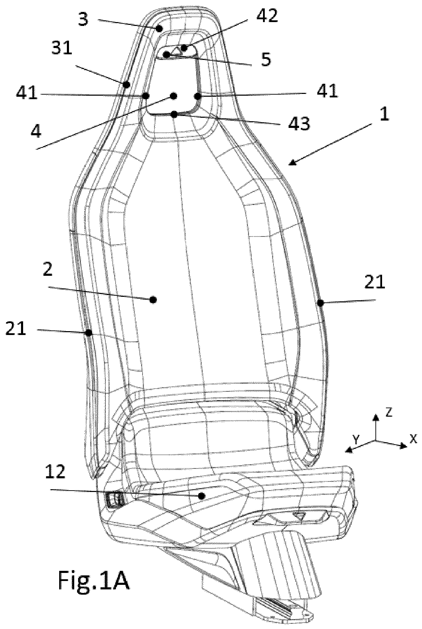

Figure 1A shows, in an illustrative manner, a perspective view of a seat 1 with a headrest 3 integrated in the backrest 2, also known as a bucket. These types of seats usually have a cushion 12, wherein the lower trunk of the user is supported, a backrest 2, configured to receive the back of the user and a headrest 3, configured to receive the contact with the head of the user. A hollow space 4 is defined between the backrest 2 and the headrest 3. Preferably, this hollow space 4 is designed to meet the ergonomic and comfort requirements of the user, providing a contact area in the uppermost area of the head and positioning the hollow space 4 such that it matches the curvature of the neck area. Preferably, in this type of seat, the headrest 3 is joined in a fixed manner to the backrest 2, such that the headrest moves jointly with the backrest.

As seen in Figure 1A, the backrest 2 is defined by at least one side end 21. These side ends 21 can protrude towards an advance direction of the vehicle as shown in the image in order to accommodate the user with greater comfort in the event of accelerations or lateral movements of the occupant. Preferably, the backrest 2 is symmetrical. For design reasons or given the need to incorporate accessories, a seat belt for example, the seat can lack symmetry.

The hollow space 4 is delimited by four main surfaces: an upper surface 42 and a lower surface 43, according to a direction Z, and by two side surfaces 41, according to a direction Y.

Likewise, Figure 1A shows an actuator 5 arranged on one of the surfaces which define the hollow space 4, more specifically on the upper surface 42, being able to be positioned on other walls as seen in Figure 5. One objective of the present invention is to prevent the user from accidentally actuating the actuator 5. With the present arrangement, the actuator 5 being on one of the walls which define the hollow space 4, it is possible to reduce the risk of accidental contact.

It can be seen how the headrest 3 is defined by an outer surface 31. It is worth mentioning that this surface is preferably made of the same material as the headrest 3. Alternatively and due to design requirements, it can be made of another material such as a rigid plastic.

The actuator 5 is configured to control a mechanical locking mechanism 51, which is configured to release a rotational movement of the backrest 2 from a first upright position to a second folded position. Alternatively, the actuator 5 can control other movements such as the sliding movement of the headrest 3.

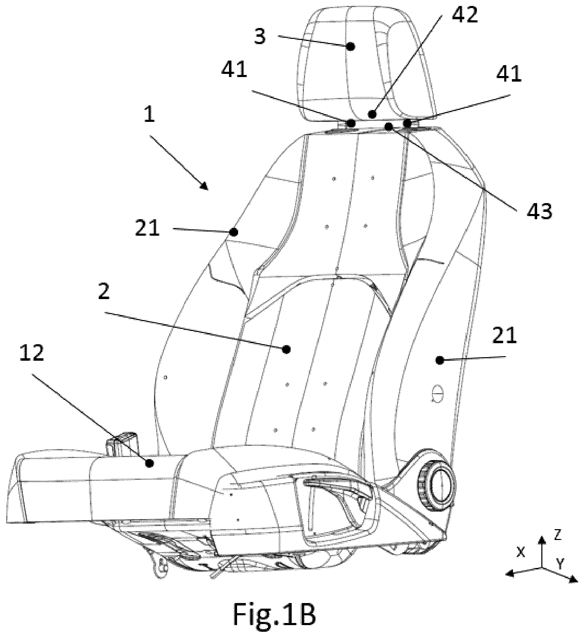

Preferably, the hollow space 4 is arranged at the same distance from each of the side ends of the backrest 2 according to a horizontal direction Y orthogonal to an advance direction X of the vehicle, being in a middle position, as set out in Figure 1. Alternatively, this hollow space 4 can be moved with respect to said middle position, due to design requirements etc. Similarly, between the headrest 3 and the backrest 2 there can be more than one hollow space 4 with aesthetic or other functions.

In a non-claimed embodiment, Figure 1B shows a vehicle seat 1 of the type with the headrest 3 which can be moved with respect to the backrest 2. The image shows a cushion 12, a backrest 2 and a headrest 3, among others. The headrest 3 can be slid with respect to the backrest 2 by means of an adjustment mechanism, i.e., the distance between the backrest 2 and the headrest 3 can be adapted. The adjustment mechanism can be, for example, a mechanical mechanism which enables the locking of positioning elements in the backrest 2. As an example, the headrest 3 that can be slid can have rod elements which lock the position of the headrest 3 at a specific height.

The image shows a seat 1 of a vehicle with a backrest 2 and a headrest 3. A hollow space 4 is defined between the headrest 3 and the backrest 2. Said hollow space 4 comprises variable dimensions depending on the position of the headrest 3 with respect to the backrest 2. Thus, the hollow space 4 is delimited by an upper surface 42, which corresponds to the lower surface of the headrest 3, a lower surface 43, which corresponds to the upper surface of the backrest 2, and two side surfaces 41. These side surfaces 41 are preferably joining elements which enable the headrest 3 to be adjusted with respect to the backrest 2, for example metal rods.

Preferably, the actuator 5 is arranged on a lower surface 43. Preferably, the actuator 5 is positioned at one same distance, according to a horizontal direction Y perpendicular to an advance direction X of the vehicle, to each of the side surfaces 41 which define the hollow space 4.

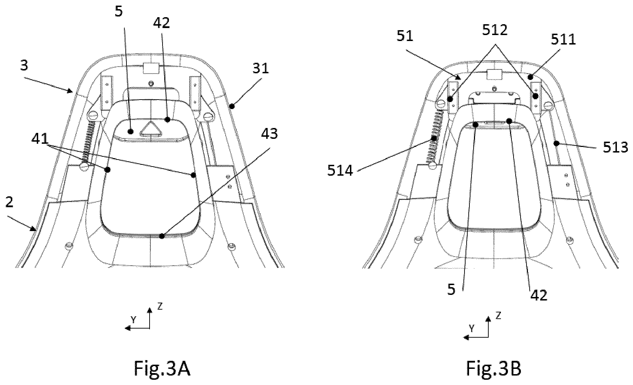

The mechanical locking mechanism 51 is configured to move the backrest 2 from a first upright position to a second folded position, if the actuator is actuated, as seen in Figure 3A and Figure 3B.

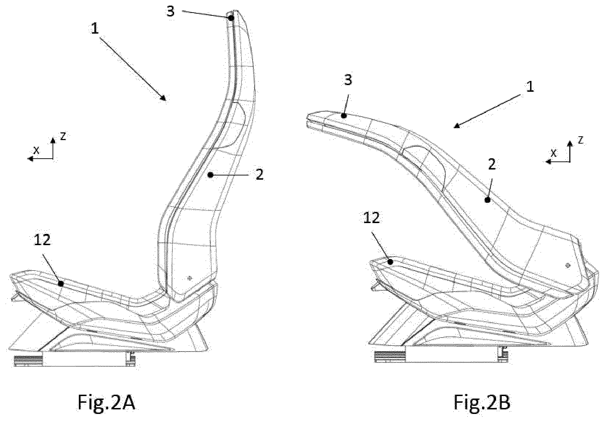

Figure 2A shows a first side view of a seat 1 for a vehicle, in a first upright position. The actuator 5 is not actuated, such that it locks the backrest 2 in the first position. In this first position, a vehicle seat 1 is presented with a cushion 12 and a backrest 2, the backrest 2 being in an upright position practically perpendicular to the cushion 12. This position is preferably defined for use, when the user sits in it. Preferably, in this position the backrest 2 will be arranged vertically, the backrest 2 being in the maximum upright position thereof. Alternatively, other intermediate positions are possible, depending on the position defined by the user. When the headrest 3 is joined in a fixed manner to the backrest 2, the headrest 3 moves jointly with it.

Figure 2B shows a second side view of a seat 1 for a vehicle, in a second folded position, according to the present invention. In this situation, the actuator 5 is not actuated, for which reason the backrest 2 can be moved by a user.

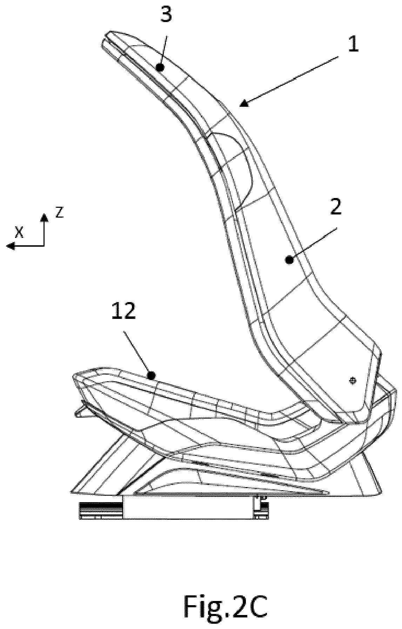

Figure 2C shows a third side view of a seat 1 for a vehicle, in an intermediate position. In this position, the actuator 5 has been actuated, such that the mechanical locking mechanism 51 has released the rotation of the backrest 2. Thus, the backrest 2 rotates between an upright position and a folded position. This intermediate position can be desirable when the user needs to access the rear area but does not need to completely fold the seat 1, for example. The seat 1 can be configured to be locked in only the first and second positions, or alternatively, the mechanical locking mechanism can enable it to be locked in intermediate positions between a first position and a second position.

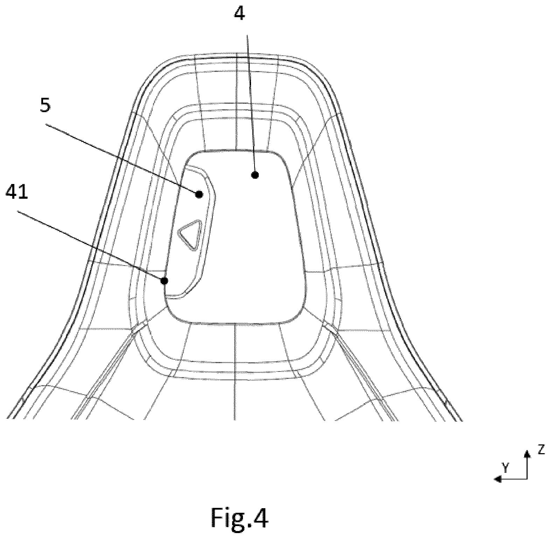

Figure 3A shows a first detail view of the headrest 3 with the actuator 5 not being actuated. It shows a headrest 3 and a backrest 2, which define the hollow space 4. Preferably, the hollow space 4 is located in a middle position, as already mentioned above, the hollow space 4 being able to be in other positions such as, for example, in a lower area, according to a vertical direction Z orthogonal to the direction X of the vehicle. According to another embodiment, the hollow space 4 can be in a position moved from the middle position. The geometry of the hollow space 4 shown in Figure 4A consists of two side surfaces 41, a lower surface 43 and an upper surface 42, thus forming an isosceles trapezoid. Alternatively, other configurations are possible, for example, with the geometry being that of a triangle or a rectangle.

Said image shows the actuator 5 arranged in a centred position, i.e., the actuator 5 is positioned at one same distance from each of the side surfaces 41 which define the hollow space 4, according to a direction Y perpendicular to an advance direction X of the vehicle. Figure 3A shows the actuator 5 arranged on the upper surface 42, and can alternatively be arranged on the lower surface 43.

In another alternative embodiment, the actuator 5 is moved from a centred position, with the possibility of being on the upper surface 42 and lower surface 43. Another embodiment is shown in Figure 4, wherein the actuator 5 is arranged on at least one of the side surfaces 41.

Figure 3B shows a second detail view of the headrest 3 with the actuator 5 being actuated. By actuating the actuator 5, the mechanical locking mechanism releases the rotation of the backrest 2, such that the backrest 2 rotates between a first upright position and a second folded position. This figure shows the actuator 5 when a user has actuated it, i.e., they have exerted a force on it.

As an example, this figure shows a mechanical locking mechanism consisting of a transmission element 511, which joins the actuator 5 and the mechanical locking mechanism 51. This transmission element 511 is configured to move on at least one rail 512, when the user exerts a force and moves the actuator 5. The rails 512 are fastened with respect to the headrest 3. When the transmission element 511 moves, it pulls a mechanical cable 513 connected to the folding system of the backrest 2, to which it transmits the movement. Once the force ceases to be exerted on the actuator 5, an elastic element 514 contracts, forcing the transmission element 511, and therefore the actuator 5, to return to the non-actuated position thereof. For example, the elastic element 514 can be a spring and the transmission element 511, a pull cable.

It should be noted that the actuator 5 is an element that can be slid with respect to the headrest 3, for which reason by being in this arrangement on the upper surface 42, the sliding movement will be in a vertical direction Z. The actuator 5 describes the same movement if it is arranged on the lower surface 43. Alternatively, if the actuator 5 is on one of the sides, the movement that the actuator 5 follows is in the direction Y. Preferably, the actuator 5 is a button or push button element configured to be pressed. Alternatively, the actuator 5 is an element configured to be pulled or to be moved according to a rotational movement with respect to the headrest 3. Another embodiment is that the actuator 5 is configured to be moved according to a rotational movement with respect to the backrest 2.

It should be noted that the headrest 3 comprises support means, wherein the support means are configured to act as a support surface for at least one finger of the occupant. Thus, the user can, for example, support the thumb on the support means and with the remaining fingers, move the actuator 5. This mode can be suitable for when the user actuates the actuator 5 from outside the vehicle or a front area. In another embodiment, the user can move the actuator 5 with their thumb and support at least one of the remaining fingers on the support means. This last embodiment can be suitable when the user is the occupant of the rear seat, for example. The distance between the support means and actuator 5 is less than 12 cm, such that the hand reaches both the actuator 5 and the support means. For example, the distance is 10 cm. Said support means are not represented in the images.

Alternatively, the headrest 3 comprises an outer surface 31, wherein the distance between the outer surface 31 and the actuator 5 is less than 12 cm, such that the user can support their hand in order to gain stability and be able to more easily exert the force, supporting at least one finger on the outer surface 31 of the headrest 3. Similarly, they can support their thumb on the outer surface 31 and at least one of their remaining fingers on the actuator 5 or vice versa. Preferably, the distance between the outer surface 31 and the actuator 5 is less than 12 cm, optimally 10 cm.

The dimensions and shape of the actuator 5 can vary in geometry, the aforementioned dimensions being envisaged for the ergonomics of the user. As for the material of the actuator 5, this will preferably be made of a rigid material which is not deformed with the pressure of the hand of the user, such as a PPT-type plastic material or similar. This actuator 5 preferably comprises a graphic identification indicating the direction wherein a force is to be applied.

Figure 4 shows the headrest 3, the actuator 5 being arranged on one of the sides 41. The sliding movement of the actuator 5 in this case is in a horizontal direction Y with respect to the advance direction of the vehicle. Alternatively, the actuator 5 can be on the opposite side surface 41 of the hollow space 4 shown in the figure. Therefore, it is seen that the actuator 5 is equally visible in a plurality of positions.

### Numerical references

1 seat
12 cushion
support means
2 backrest
21 side end
3 headrest
31 outer surface
4 hollow space
41 side surface
42 upper surface
43 lower surface
5 actuator
51 mechanical locking mechanism
511 transmission element
512 rail
513 mechanical cable
514 elastic element

## Claims

1. A seat (1) for a vehicle, wherein the seat (1) comprises:
- a backrest (2)
- a headrest (3), wherein the headrest (3) is joined in a fixed manner to the backrest (2) such that the headrest (3) moves jointly with the backrest (2), said headrest (3) being integrated in the backrest (2), wherein the backrest (2) and the headrest (3) define a hollow space (4) therebetween,
- a folding mechanism, configured to move the backrest (2) from a first upright position to a second folded position, and
- an actuator (5) configured to control the folding mechanism,
**characterised in that** the actuator (5) is arranged on at least one of the surfaces which define the hollow space (4), wherein the hollow space (4) is an opening which crosses through the entire solid portion of the seat (1).

2. The seat (1) for a vehicle according to claim 1, wherein the hollow is arranged in a middle position, wherein the middle position is located at one same distance, according to a horizontal direction Y perpendicular to an advance direction X of the vehicle, from each of the side ends (21) of the backrest (2).

3. The seat (1) for a vehicle according to any of the preceding claims, wherein the actuator (5) is arranged in a centred position with respect to the hollow space (4), wherein the centred position is positioned at one same distance, according to a horizontal direction Y perpendicular to an advance direction X of the vehicle, from each of the side surfaces (41) which define the hollow.

4. The seat (1) for a vehicle according to claim 2, wherein the actuator (5) is moved with respect to a centred position with respect to the hollow space (4), wherein the centred position is positioned at one same distance, according to a horizontal direction Y perpendicular to an advance direction X of the vehicle, from each of the side surfaces (41) which define the hollow.

5. The seat (1) for a vehicle according to claim 4, wherein the actuator (5) is arranged on at least one of the side surfaces (41) which define the hollow space (4).

6. The seat (1) for a vehicle according to any of the preceding claims, wherein the actuator (5) is an element that can be slid with respect to the headrest (3).

7. The seat (1) for a vehicle according to claim 6, wherein the headrest (3) comprises support means, wherein the support means are configured to act as a support surface for at least one finger of the occupant.

8. The seat (1) for a vehicle according to claim 7, wherein the distance between the support means and the actuator (5) is less than 12 cm.

9. The seat (1) for a vehicle according to claim 6, wherein the headrest (3) comprises an outer surface (31), wherein the distance between the outer surface (31) and the actuator (5) is less than 12 cm.

10. The seat (1) for a vehicle according to any of claims 1 to 5, wherein the actuator (5) is configured to be moved according to a rotational movement with respect to the headrest (3).

11. The seat (1) for a vehicle according to claim 1, wherein if the actuator (5) is actuated, a mechanical locking mechanism (51) releases a rotation of the backrest (2), such that the backrest (2) rotates between a first upright position and a second folded position.

## Patentansprüche

1. Fahrzeugsitz (1), wobei der Sitz (1) Folgendes umfasst:
- eine Rückenlehne (2),
- eine Kopfstütze (3), wobei die Kopfstütze (3) auf feste Weise mit der Rückenlehne (2) verbunden ist, so dass sich die Kopfstütze (3) zusammen mit der Rückenlehne (2) bewegt, wobei die Kopfstütze (3) in die Rückenlehne (2) integriert ist, wobei die Rückenlehne (2) und die Kopfstütze (3) einen hohlen Raum (4) dazwischen definieren,
- einen Faltmechanismus, der konfiguriert ist, um die Rückenlehne (2) aus einer ersten aufrechten Position in eine zweite gefaltete Position zu bewegen, und
- eine Betätigungsvorrichtung (5), die konfiguriert ist, um den Faltmechanismus zu steuern,
**dadurch gekennzeichnet, dass** die Betätigungsvorrichtung (5) auf mindestens einer der Flächen angeordnet ist, die den hohlen Raum (4) definieren, wobei der hohle Raum (4) eine Öffnung ist, die den gesamten festen Abschnitt des Sitzes (1) durchquert.

2. Fahrzeugsitz (1) nach Anspruch 1, wobei der Hohlraum in einer mittleren Position angeordnet ist, wobei sich die mittlere Position in einem gleichen Abstand gemäß einer horizontalen Richtung Y senkrecht zu einer Vorschubrichtung X des Fahrzeugs von jedem der seitlichen Enden (21) der Rückenlehne (2) befindet.

3. Fahrzeugsitz (1) nach einem der vorhergehenden Ansprüche, wobei die Betätigungsvorrichtung (5) in einer zentrierten Position mit Bezug auf den Hohlraum (4) angeordnet ist, wobei die zentrierte Position in einem gleichen Abstand gemäß einer horizontalen Richtung Y senkrecht zu einer Vorschubrichtung X des Fahrzeugs von jeder der seitlichen Flächen (41), die den Hohlraum definieren, positioniert ist.

4. Fahrzeugsitz (1) nach Anspruch 2, wobei die Betätigungsvorrichtung (5) mit Bezug auf eine zentrierte Position mit Bezug auf den Hohlraum (4) bewegt wird, wobei die zentrierte Position in einem gleichen Abstand gemäß einer horizontalen Richtung Y senkrecht zu einer Vorschubrichtung X des Fahrzeugs von jeder der seitlichen Flächen (41), die den Hohlraum definieren, positioniert ist.

5. Fahrzeugsitz (1) nach Anspruch 4, wobei die Betätigungsvorrichtung (5) auf mindestens einer der seitlichen Flächen (41) angeordnet ist, die den hohlen Raum (4) definieren.

6. Fahrzeugsitz (1) nach einem der vorhergehenden Ansprüche, wobei die Betätigungsvorrichtung (5) ein Element ist, das mit Bezug auf die Kopfstütze (3) geschoben werden kann.

7. Fahrzeugsitz (1) nach Anspruch 6, wobei die Kopfstütze (3) Stützmittel umfasst, wobei die Stützmittel konfiguriert sind, um als Stützfläche für mindestens einen Finger des Insassen zu dienen.

8. Fahrzeugsitz (1) nach Anspruch 7, wobei der Abstand zwischen den Stützmitteln und der Betätigungsvorrichtung (5) weniger als 12 cm beträgt.

9. Fahrzeugsitz (1) nach Anspruch 6, wobei die Kopfstütze (3) eine äußere Fläche (31) umfasst, wobei der Abstand zwischen der äußeren Fläche (31) und der Betätigungsvorrichtung (5) weniger als 12 cm beträgt.

10. Fahrzeugsitz (1) nach einem der Ansprüche 1 bis 5, wobei die Betätigungsvorrichtung (5) konfiguriert ist, um gemäß einer Rotationsbewegung mit Bezug auf die Kopfstütze (3) bewegt zu werden.

11. Fahrzeugsitz (1) nach Anspruch 1, wobei wenn die Betätigungsvorrichtung (5) betätigt wird, ein mechanischer Verriegelungsmechanismus (51) eine Rotation der Rückenlehne (2) freisetzt, so dass die Rückenlehne (2) zwischen einer ersten aufrechten Position und einer zweiten gefalteten Position rotiert.

## Revendications

1. Siège (1) pour un véhicule, dans lequel le siège (1) comprend :
un dossier (2),
un appui-tête (3), dans lequel l'appui-tête (3) est assemblé de manière fixe au dossier (2) de sorte que l'appui-tête (3) se déplace conjointement avec le dossier (2), ledit appui-tête (3) étant intégré dans le dossier (2), dans lequel le dossier (2) et l'appui-tête (3) définissent un espace creux (4) entre eux,
un mécanisme de pliage configuré pour déplacer le dossier (2) d'une première position droite à une seconde position pliée, et
un actionneur (5) configuré pour commander le mécanisme de pliage,
**caractérisé en ce que** l'actionneur (5) est agencé sur au moins l'une des surfaces qui définissent l'espace creux (4), dans lequel l'espace creux (4) est une ouverture qui traverse toute la partie pleine du siège (1).

2. Siège (1) pour un véhicule selon la revendication 1, dans lequel le creux est agencé dans une position médiane, dans lequel la position médiane est située à une même distance, selon une direction horizontale Y perpendiculaire à une direction d'avancement X du véhicule, pour chacune des extrémités latérales (21) du dossier (2).

3. Siège (1) pour un véhicule selon l'une quelconque des revendications précédentes, dans lequel l'actionneur (5) est agencé dans une position centrée par rapport à l'espace creux (4), dans lequel la position centrée est positionnée à une même distance, selon une direction horizontale Y perpendiculaire à une direction d'avancement X du véhicule, pour chacune des surfaces latérales (41) qui définissent le creux.

4. Siège (1) pour un véhicule selon la revendication 2, dans lequel l'actionneur (5) est déplacé par rapport à une position centrée par rapport à l'espace creux (4), dans lequel la position centrée est positionnée à une même distance, selon une direction horizontale Y perpendiculaire à une direction d'avancement X du véhicule, pour chacune des surfaces latérales (41) qui définissent le creux.

5. Siège (1) pour un véhicule selon la revendication 4, dans lequel l'actionneur (5) est agencé sur au moins l'une des surfaces latérales (41) qui définissent l'espace creux (4).

6. Siège (1) pour un véhicule selon l'une quelconque des revendications précédentes, dans lequel l'actionneur (5) est un élément qui peut coulisser par rapport à l'appui-tête (3).

7. Siège (1) pour un véhicule selon la revendication 6, dans lequel l'appui-tête (3) comprend des moyens de support, dans lequel les moyens de support sont configurés pour servir de surface de support pour au moins un doigt de l'occupant.

8. Siège (1) pour un véhicule selon la revendication 7, dans lequel la distance entre les moyens de support et l'actionneur (5) est inférieure à 12 cm.

9. Siège (1) pour un véhicule selon la revendication 6, dans lequel l'appui-tête (3) comprend une surface externe (31), dans lequel la distance entre la surface externe (31) et l'actionneur (5) est inférieure à 12 cm.

10. Siège (1) pour un véhicule selon l'une quelconque des revendications 1 à 5, dans lequel l'actionneur (5) est configuré pour être déplacé selon un mouvement de rotation par rapport à l'appui-tête (3).

11. Siège (1) pour un véhicule selon la revendication 1, dans lequel si l'actionneur (5) est actionné, un mécanisme de blocage mécanique (51) libère une rotation du dossier (2), de sorte que le dossier (2) tourne entre une première position droite et une seconde position pliée.
